# EUROPÄISCHE PATENTSCHRIFT

(11) **EP 2 199 822 B1**
(45) Veröffentlichungstag und Bekanntmachung des Hinweises auf die Patenterteilung: **05.10.2016**
(21) Anmeldenummer: 08022149.2
(22) Anmeldetag: 19.12.2008
(51) Int. Cl.: G01S 17/02, G01S 7/491, G01S 7/493

(54) **Verfahren und optischer Sensor zum Nachweis von Objekten in einem Überwachungsbereich**
Method and optical sensor for detecting objects in a surveillance range
Procédé et capteur optique destinés au contrôle d'objets dans une zone de surveillance

(43) Veröffentlichungstag der Anmeldung: 23.06.2010
(73) Patentinhaber: Pepperl + Fuchs GmbH, 68307 Mannheim (DE)
(72) Erfinder: Nutz, Karl, 15370 Petershagen (DE); Jurgeit, Ralph-Rainer, Dr., 16356 Ahrensfelde (DE); Bartsch, Stephan, 12207 Berlin (DE); Strauch, Reinhard, 13437 Berlin (DE)
(74) Vertreter: Schiffer, Axel Martin

(56) Entgegenhaltungen:
- EP-A- 1 522 870
- EP-A- 2 008 561
- US-A- 5 612 779
- US-A1- 2004 056 199
- US-A1- 2005 110 976
- US-B1- 6 650 404

## Beschreibung

Die vorliegende Erfindung betrifft in einem ersten Aspekt ein Verfahren zum Nachweis von Objekten in einem Überwachungsbereich nach dem Oberbegriff des Anspruchs 1.

In einem zweiten Gesichtspunkt bezieht sich die Erfindung auf einen optischen Sensor zum Nachweis von Objekten in einem Überwachungsbereich nach dem Oberbegriff des Anspruchs 8.

Solche Verfahren und optischen Sensoren sind, beispielsweise als Triangulationssensoren, Lichtschranken oder Lichttaster, in vielen Varianten und für eine Vielzahl von Einsatzzwecken bekannt.

Aus US 6,650,404 B1, aus EP 1 522 870 A1 sowie aus US 2005/011 0976 A1 geht jeweils ein Entfernungsmesser hervor. Bei diesem wird mit einem Laser ein Lichtpuls in Richtung eines Ziels gesendet. Von dem Ziel zurückgeworfenes Licht wird mit einem Lichtdetektor gemessen. Aus der Laufzeit des Lichtpulses wird sodann der Abstand zum Ziel ermittelt.

In US 5,612,779 A ist eine Vorrichtung zur Unterscheidung zwischen einem Signalpuls und Rauschen beschrieben, wobei der Signalpuls insbesondere auf einen Laserpuls eines Abstandsmessers nach dem Lichtlaufzeitprinzip zurückgehen kann.

Die nachveröffentlichte Schrift EP 2 008 561 A2 betrifft einen Flüssigkeitsspender mit einem Infrarot-Sensor, welcher einen Infrarot-Sender und einen Infrarot-Empfänger aufweist. Hält ein Benutzer eine Hand vor den Infrarot-Sensor, so wird dies detektiert und die Abgabe der in dem Spender aufgenommenen Flüssigkeit veranlasst. Um die Anwesenheit der Hand festzustellen, wird eine Differenz zwischen Empfangssignalen des Infrarot-Empfängers bei eingeschaltetem und bei ausgeschaltetem Infrarot-Sender betrachtet.

In US 2004/0056199 A1 wird ein Infrarot-Sensor zum Nachweis eines Hindernisses beschrieben. Dabei soll Infrarotlicht, das vom Sensor ausgestrahlt und vom Hindernis zurückgeworfen wurde, von Sonnenlicht unterschieden werden. Hierzu wird ein Gleichanteil des Messsignals herausgefiltert oder vom Messsignal abgezogen.

Bei einem gattungsgemäßen Verfahren wird mit einer Sendeeinheit Sendelicht oszillierend in den Überwachungsbereich gestrahlt, mit einer Empfangseinheit wird aus dem Überwachungsbereich zurückgestrahltes Licht nachgewiesen, zur Auswertung wird zumindest ein oszillierender Anteil eines Empfangssignals der Empfangseinheit verstärkt und es wird ein Nachweissignal abgegeben, wenn ein von dem Empfangssignal der Empfangseinheit abgeleitetes Vergleichssignal größer ist als eine festzulegende Bewertungsschwelle.

Ein gattungsgemäßer optischer Sensor zum Nachweis von Objekten in einem Überwachungsbereich weist eine Sendeeinheit zum oszillierenden Strahlen von Sendelicht in den Überwachungsbereich und eine Empfangseinheit zum Nachweis von aus dem Überwachungsbereich zurückgestrahltem Licht und zum Verstärken zumindest eines oszillierenden Anteils eines Empfangssignals der Empfangseinheit auf. Außerdem ist eine Steuer- und Auswerteeinheit vorhanden zum Auswerten des von der Empfangseinheit nachgewiesenen Lichts und zum Abgeben eines Nachweissignals, wenn ein von dem Empfangssignal der Empfangseinheit abgeleitetes Vergleichssignal größer ist als eine festzulegende Bewertungsschwelle.

Das Messprinzip solcher Sensoren besteht ganz allgemein darin, dass das zurückgestrahlte, also zurückreflektierte und/oder zurückgestreute Licht zum Nachweis von Objekten verwendet wird.

Eine typische Einsatzsituation für einen solchen optoelektronischen Sensor ist beispielsweise die Verwendung als Türüberwachungssensor für eine automatische Drehflügeltür. Insbesondere werden solche Türüberwachungssensoren im oberen Bereich eines Türblatts der automatischen Tür mitfahrend montiert und überwachen einen Überwachungsbereich auf dem Fußboden vor dem Türblatt.

Bei der messtechnischen Verarbeitung und Auswertung der von der Empfangseinheit nachgewiesenen Empfangssignale ist für allgemeine Einsatzsituationen solcher optischen Sensoren zu beachten, dass die nachzuweisenden Objekte und/oder zu berücksichtigende Hintergrundflächen nicht nur durch den optoelektronischen Sender der Sendeeinheit, sondern auch durch andere Lichtquellen beleuchtet werden. Bei diesen anderen Lichtquellen handelt es sich insbesondere um Tageslicht, also Licht der Sonne sowie um Licht von in der Umgebung des Einsatzorts befindlichen Lampen. Diese zusätzlichen Lichtquellen erzeugen ein langsam veränderliches Signal, das entsprechend einer Statistik des Photoneneinfalls verrauscht ist. Da es sich bei diesem Rauschen im Wesentlichen um Schrotrauschen, englisch shot-noise, handelt, ist die Größe des Rauschens proportional zur Wurzel dieses zusätzlichen Lichtanteils, der im Folgenden als Fremdlichtanteil bezeichnet wird.

Das Empfangssignal der Empfangseinheit wird üblicherweise einer Schwellwertbewertung unterzogen, wobei die Bewertungsschwelle so gewählt wird, dass sie unter allen sinnvollen Bedingungen über dem Rauschen des Fremdlichtanteils liegt. So wird vermieden, dass der optoelektronische Sensor ein vom Fremdlichtanteil herrührendes Rauschen als nachzuweisendes Objekt interpretiert und ein entsprechendes Nachweissignal abgibt.

Da außerdem die optoelektronischen Sensoren, beispielsweise Lichttaster, bis zu einer spezifizierten Fremdlichtbelastung ordnungsgemäß arbeiten sollen, wird die Bewertungsschwelle üblicherweise so gelegt, dass bis zu dieser spezifizierten Fremdlichtbelastung eine Auslösung, also ein Schalten des Tasters durch das Fremdlichtrauschen nicht erfolgt.

Zwar kann durch oszillierendes Einstrahlen des Sendelichts in den Überwachungsbereich und entsprechendes Verstärken des oszillierenden Anteils des Empfangssignals auf der Auswerteseite die Intensität von nicht oszillierendem Fremdlicht prinzipiell ausgeblendet werden. Einer solchen Eliminierung vom Prinzip her nicht zugänglich sind Lichtintensitäten von hochfrequenten Lichtquellen in der Umgebung des Einsatzorts, wie beispielsweise hochfrequente Leuchtstofflampen. Nach wie vor ist außerdem auch der verstärkte oszillierende Anteil des Empfangssignals vom Fremdlichtrauschen überlagert.

Ein Nachteil der bekannten optoelektronischen Sensoren, bei denen mit einer auf maximale Fremdlichtbelastung ausgelegten Bewertungsschwelle für die Signalbewertung gearbeitet wird, besteht darin, dass in Anwendungsfällen, wo die Fremdlichtbelastung tatsächlich wesentlich kleiner ist, Empfindlichkeit verschenkt wird.

Da die Fremdlichtbelastung für die meisten Anwendungssituationen deutlich unter derjenigen Grenzfremdlichtbelastung liegt, für welche eine einwandfreie Funktion des Sensors garantiert werden muss, steht für die meisten Anwendungsfälle nur eine deutlich geringere Empfindlichkeit, als prinzipiell möglich, zur Verfügung.

Als eine **Aufgabe** der vorliegenden Erfindung kann angesehen werden, ein Verfahren zum Nachweis von Objekten in einem Überwachungsbereich anzugeben, bei dem für unterschiedliche Einsatzsituationen eine möglichst gute Empfindlichkeit erreicht wird. Außerdem soll ein optischer Sensor zum Nachweis von Objekten in einem Überwachungsbereich geschaffen werden, bei dem für unterschiedliche Einsatzsituationen eine jeweils möglichst gute Empfindlichkeit erreicht wird.

Diese Aufgabe wird in einem ersten Gesichtspunkt der Erfindung durch das Verfahren mit den Merkmalen des Anspruchs 1 gelöst.

In einem weiteren Aspekt der Erfindung wird diese Aufgabe durch den optischen Sensor mit den Merkmalen des Anspruchs 8 gelöst.

Vorteilhafte Varianten des erfindungsgemäßen Verfahrens und bevorzugte Weiterbildungen des erfindungsgemäßen optischen Sensors sind Gegenstand der abhängigen Ansprüche und werden außerdem in der folgenden Beschreibung, insbesondere im Zusammenhang mit den beigefügten Figuren, beschrieben.

Das Verfahren der oben genannten Art ist erfindungsgemäß dadurch weitergebildet, dass ein auf die Empfangseinheit eintreffender Fremdlichtanteil bei der Auswertung berücksichtigt wird, dass mit zunehmendem Fremdlichtanteil die Bewertungsschwelle angehoben wird und/oder dass das Vergleichssignal um einen mit zunehmendem Fremdlichtanteil kleiner werdenden Faktor angehoben wird.

Der optische Sensor der oben angegebenen Art ist erfindungsgemäß dadurch weitergebildet, dass die Steuer- und Auswerteeinheit eine Bewertungseinheit aufweist zum Berücksichtigen eines auf die Empfangseinheit eintreffenden Fremdlichtanteils bei der Auswertung, dass die Steuer- und Auswerteeinheit eingerichtet ist zum Anheben der Bewertungsschwelle mit zunehmenden Fremdlichtanteil und/oder dass die Steuer- und Auswerteeinheit eingerichtet ist zum Anheben des Vergleichssignals um einen mit zunehmenden Fremdlichtanteil kleiner werdenden Faktor.

Ein erster Kerngedanke der Erfindung kann darin gesehen werden, ein durch Fremdlicht in der Empfangseinheit generiertes Gleichsignal, also einen langsam veränderlichen Anteil des Empfangssignals, in die Bewertung und Auswertung mit einzubeziehen.

Als weiterer Grundgedanke der vorliegenden Erfindung kann erachtet werden, die Bewertungsschwelle sodann in Abhängigkeit des Fremdlichtanteils zu verändern, insbesondere die Bewertungsschwelle mit zunehmendem Fremdlichtanteil anzuheben und entsprechend mit abnehmendem Fremdlichtanteil abzusenken.

Ein dritter Kerngedanke der Erfindung schließlich besteht in der Erkenntnis, dass eine Berücksichtigung des Fremdlichtanteils auch in der Weise erfolgen kann, dass das Vergleichssignal vor dem letztendlichen Vergleich mit der Bewertungsschwelle um einen bestimmten Faktor oder Wert angehoben wird, der mit zunehmendem Fremdlichtanteil kleiner wird. Dies kann insbesondere bei konstanter, auf maximale Fremdlichtbelastung ausgelegter Bewertungsschwelle erfolgen. Sinkt die tatsächliche Fremdlichtbelastung und dementsprechend auch das von der Empfangseinheit nachgewiesene oszillierende Empfangssignal ab, wird zu diesem reduzierten Signal ein bestimmter Wert addiert oder das von der Empfangseinheit nachgewiesene oszillierende Empfangssignal wird mit einem entsprechend erhöhten Faktor multipliziert, so dass das Vergleichssignal, wenn der oszillierende Anteil des Empfangssignals groß genug ist, dann wieder über der Bewertungsschwelle liegt.

Das Erhöhen des Vergleichssignals in Abhängigkeit des Fremdlichtanteils kann alternativ oder ergänzend zu einer Variierung der Bewertungsschwelle in der oben angegebenen Weise erfolgen.

Der oszillierende Anteil des Empfangssignals wird auch als dynamischer Anteil oder als dynamisches Signal bezeichnet. Der langsam veränderliche Anteil des Empfangssignals wird auch als Gleichanteil bezeichnet.

Unter dem Begriff Vergleichssignal wird für die vorliegende Beschreibung das Signal verstanden, das letzten Endes mit der Bewertungsschwelle in der Steuer- und Auswerteeinheit verglichen wird. Dieses Vergleichssignal ist von dem oszillierenden Anteil des Empfangssignals jedenfalls in irgendeiner Weise monoton abhängig, d.h. mit zunehmendem oszillierenden Anteil des Empfangssignals steigt auch das Vergleichssignal an.

Bei dem Sendelicht kann es sich grundsätzlich um elektromagnetische Strahlung im sichtbaren Bereich oder angrenzender Bereiche handeln. Besonders bevorzugt wird Infrarotlicht als Sendelicht verwendet. Dies hat beispielsweise den Vorteil, dass Strahlung hochfrequenter Quellen, wie Leuchtstofflampen, die einen Beitrag zum oszillierenden Anteil des Empfangssignals liefern, durch Farbfilter für die meisten Anwendungssituationen hinreichend gut herausgefiltert werden können, da solche hochfrequenten Lichtquellen im Infrarotbereich nur schwach emittieren.

Die Sendeeinheit weist insbesondere mindestens einen optoelektronischen Sender sowie eine Optik auf, mit welcher das Sendelicht in den Überwachungsbereich und auf eventuell dort befindliche Objekte geleitet wird.

Die Empfangseinheit weist mindestens einen optoelektronischen Empfänger oder Detektor und insbesondere eine Optik auf, die aus dem Überwachungsbereich oder einem Objekt zurückgestrahltes oder gestreutes Licht auf den Empfänger abbildet.

Ein erster wesentlicher Vorteil der Erfindung ist darin zu sehen, dass man durch eine vom Fremdlicht abhängige Bewertung des dynamischen Signals ein an die jeweilige Fremdlichtsituation angepasste weitgehend optimale Empfindlichkeit des optoelektronischen Sensors erzielen kann.

Abhängig von der jeweiligen Anwendung sind hierdurch Verbesserungen des Signal/Rausch-Verhältnisses von bis zu einem Faktor 10 möglich. In vielen Fällen wird eine Verbesserung des Signal/Rausch-Verhältnisses um mindestens einen Faktor 3 erreicht.

Das erfindungsgemäße Verfahren und der erfindungsgemäße optische Sensor können grundsätzlich dort sinnvoll eingesetzt werden, wo wechselnde Fremdlichtbedingungen eine Rolle spielen. Eine typische Einsatzmöglichkeit bezieht sich auf einen Türüberwachungssensor, der beispielsweise auf eine von Tageslicht beschienene Fläche des Fußbodens ausgerichtet ist. Wenn beispielsweise der Überwachungsbereich eines solchen mitfahrenden Türüberwachungssensors beim Öffnen der Tür von einer sehr hellen Fläche, beispielsweise einem hellen Marmorfußboden, auf eine schwarze Gummimatte wandert, ändern sich die Fremdlichtbedingungen und damit das von der Empfangseinheit nachgewiesene Empfangssignal erheblich. Bei einer solchen Situation müsste beispielsweise die Bewertungsschwelle erheblich abgesenkt werden, wenn der Überwachungsbereich auf der schwarzen Gummimatte liegt. Im Vergleich zum Stand der Technik kann mit dem erfindungsgemäßen optischen Sensor für die Situation, wo der Überwachungsbereich auf der schwarzen Gummimatte liegt, eine deutlich gesteigerte Empfindlichkeit erreicht werden.

Bevorzugt werden vor jeder eigentlichen Messung der Fremdlichtanteil und/oder das Fremdlichtrauschen bestimmt.

Bei einer besonders bevorzugten Ausführungsvariante des erfindungsgemäßen Verfahrens wird das Rauschen des Fremdlichtanteils aus den Messwerten einer Vielzahl von Messungen bestimmt. Hierbei handelt es sich um Messungen des Empfangssignals der Empfangseinheit, insbesondere des oszillierenden Anteils dieses Empfangssignals. Diese Variante hat den Vorteil, dass grundsätzlich alle Fremdlichtquellen, beispielsweise auch der Beitrag von hochfrequenten Lichtquellen in der Einsatzumgebung, berücksichtigt werden. Ein weiterer Vorteil besteht darin, dass prinzipiell keine apparativen Einrichtungen vorhanden sein müssen, um einen Gleichanteil, also einen langsam veränderlichen Signalanteil des Empfangssignals, zu erfassen.

Erfindungsgemäß wird der Fremdlichtanteil aus einem langsam veränderlichen Anteil des Empfangssignals bestimmt. Da dies messtechnisch besonders rasch erfolgen kann, ist diese Variante besonders für Anwendungen im Bereich der Automatisierungstechnik interessant, wo hohe Geschwindigkeiten gefragt sind. Beispielsweise sollen optische Sensoren für den Einsatz im Bereich der Automatisierungstechnik Ansprechzeiten von bis zu 0,05 ms und darunter aufweisen.

Im Vergleich dazu ist die erste Variante, bei welcher das Rauschen des Fremdlichtanteils bestimmt wird, besonders gut geeignet für Einsatzzwecke, wo hohe Genauigkeiten gefordert werden, es aber auf rasche Reaktionszeiten nicht primär ankommt. Beispielsweise ist dies der Fall für Anwendungen bei der Überwachung von Türen und Aufzügen. Dort sind Reaktionszeiten von etwa 50 ms ausreichend.

Im Hinblick auf die Variation der Bewertungsschwelle ist es von Vorteil, wenn die Bewertungsschwelle mit zunehmendem Fremdlichtanteil um einen Betrag erhöht wird, der wenigstens in Teilbereichen proportional zur Wurzel des Fremdlichtanteils oder proportional zum Rauschen des Fremdlichtanteils ist. Dadurch wird der Fremdlichtanteil adäquat berücksichtigt und die Empfindlichkeit des optischen Sensors ist weitgehend optimal auf die Einsatzsituation angepasst. Entsprechend dieser Abhängigkeit wird die Bewertungsschwelle mit abnehmendem Fremdlichtanteil oder abnehmendem Rauschen des Fremdlichts abgesenkt.

Bei variabler Erhöhung des Vergleichssignals in Abhängigkeit von der Intensität des Fremdlichts ist in verfahrensmäßiger Hinsicht besonders bevorzugt, wenn das Vergleichssignal aus dem verstärkten oszillierenden Anteil des Empfangssignals erhalten wird durch Multiplizieren mit einem Faktor, der mindestens in Teilbereichen umgekehrt proportional ist zur Wurzel einer Summe des Fremdlichtanteils und einer Konstante. Durch diese Abhängigkeit wird das Rauschen des Fremdlichts in physikalisch zutreffender Weise berücksichtigt. Bei einfachen Ausführungsmöglichkeiten kann die Konstante vernachlässigt werden. Bevorzugt wird aber als Konstante ein Wert gewählt, der dem Quadrat eines Dunkelrauschens eines Detektors der Empfangseinheit entspricht.

Eine weitere Möglichkeit, einen variablen Fremdlichtanteil geeignet zu berücksichtigen, besteht darin, dass das Vergleichssignal aus dem verstärkten oszillierenden Anteil des Empfangssignals erhalten wird durch Multiplizieren mit einem Faktor, der mindestens in Teilbereichen umgekehrt proportional ist zur Wurzel einer Summe aus einem ermittelten Maß für das Rauschen des Fremdlichtanteils und einer Konstanten. Hierbei wird für die Konstante zweckmäßigerweise ein Wert gewählt, welcher dem Quadrat des Dunkelrauschens des Detektors der Empfangseinheit entspricht.

Die vorgenannten mathematischen Operationen und Verarbeitungsschritte können prinzipiell durch Analogschaltungen realisiert werden. Eine höhere Variabilität und Flexibilität wird jedoch erreicht, wenn die Steuer- und Auswerteeinheit einen Analog-Digital-Wandler aufweist zum digitalen Durchführen der Änderungen der Bewertungsschwelle und/oder des Vergleichssignals in einer Recheneinheit. Beispielsweise kann die Steuer- und Auswerteeinheit durch einen Mikrocontroller oder durch einen programmierbaren Logikbaustein gebildet sein, in welchem ein Analog-Digital-Wandler bereits vorhanden ist.

Zum Verstärken des oszillierenden Anteils des Empfangssignals weist die Bewertungseinheit zweckmäßig eine Operationsverstärkerschaltung auf. Zur Realisierung der oben beschriebenen ersten Verfahrensvariante, bei der das Rauschen des Fremdlichts direkt durch eine Vielzahl von Messungen bestimmt wird, ist diese Verstärkerschaltung selbst bereits ausreichend. Diese Schaltung ist so aufgebaut, dass ein langsam veränderlicher Anteil des Empfangssignals zum Verstärkerausgang durchgereicht oder sogar gedämpft wird.

Zum Bestimmen des Fremdlichtanteils aus einem langsam veränderlichen Signalanteil des Empfangssignals kann die Bewertungseinheit in vorteilhafter Weise eine weitere Operationsverstärkerschaltung aufweisen als Impedanzwandler zum Durchreichen und/oder Verstärken eines langsam veränderlichen Anteils des Empfangssignals.

Der Fremdlichtanteil kann mit größerer Genauigkeit bestimmt werden, wenn hierzu die Sendeeinheit ausgeschaltet wird. Da in vielen Anwendungssituationen der Anteil des Fremdlichts bei weitem dominiert, also viel größer ist als der Anteil des von der Empfangseinheit nachgewiesenen Lichts, der auf zurückreflektiertes und/oder zurückgestreutes Sendelicht zurückgeht, kann in solchen Anwendungssituationen die Sendeeinheit auch angeschaltet bleiben. Für die Bestimmung der jeweiligen erfindungsgemäßen Änderungen der Bewertungsschwelle und/oder des Vergleichssignals spielt der zusätzliche, durch Sendelicht verursachte Anteil des Empfangssignals dann praktisch keine Rolle mehr.

Ein Maß für das Rauschen des Fremdlichtanteils kann bei digitaler Verarbeitung prinzipiell ermittelt werden durch Bestimmen einer Standardabweichung von Messwerten des Empfangssignals um einen Mittelwert. Unter dem Begriff der Standardabweichung wird hier, entsprechend der üblichen Definition, die Wurzel der mittleren quadratischen Abweichung der Messwerte des Empfangssignals um den Mittelwert verstanden.

Bei besonders bevorzugten Verfahrensvarianten wird jedoch ein Maß für das Rauschen des Fremdlichtanteils bestimmt durch Mittelung über Absolutwerte oder Quadrate von Abweichungen von Messwerten des Empfangssignals um einen Mittelwert. Im Vergleich zu einer Bestimmung der Standardabweichung, bei der die Abweichungen quadriert und aufsummiert werden und anschließend eine Wurzel gezogen werden muss, sind diese Verfahrensvarianten weniger zeitaufwändig und deshalb bei der Umsetzung bevorzugt.

Der genannte Mittelwert wird über den oszillierenden Anteil des Empfangssignals, insbesondere bei abgeschaltetem Sendelicht, bestimmt. Dieser Mittelwert ist der Arbeitspunkt, der durch geeignete Beschaltung des Verstärkers so eingestellt wird, dass er in einem Spannungsbereich liegt, der gut von dem verwendeten Analog-Digital-Wandler abgebildet wird.

In bevorzugter Weise können in diesem Zusammenhang zum Bestimmen des Mittelwerts des Arbeitspunkts, also des Mittelwerts des oszillierenden Anteils des Empfangssignals bei abgeschalteter Sendeeinheit, des Mittelwerts des oszillierenden Empfangssignals bei eingeschalteter Sendeeinheit und der Maße für das Rauschen des Fremdlichtanteils gleitende Mittelwertbildungen durchgeführt werden.

Beispielsweise werden die letzten 1024 zurückliegenden Messungen zum Bilden der Mittelwerte des Arbeitspunkts und die letzten 64 zurückliegenden Werte werden zum Bilden der Maße für das Rauschen des Fremdlichtanteils herangezogen. Je größer die Mittelungstiefe, desto genauer sind der Mittelwert des Empfangssignals bei eingeschalteter Sendeeinheit und das effektive Rauschen bekannt, desto langsamer ist aber andererseits das System. Hier muss für die entsprechende Anwendung ein geeigneter Kompromiss gefunden werden. Für Verwendungen im Bereich der Überwachung von Türen und Aufzügen sind vergleichsweise große Reaktionszeiten bis zu 50 ms ausreichend, so dass hier große Mittelungstiefen gewählt werden können.

Vorteilhaft ist in diesem Zusammenhang außerdem, wenn ein Mittelwert des Empfangssignals bei eingeschalteter Sendeeinheit und die Maße für das Rauschen des Fremdlichtanteils mit derselben Mittelungstiefe gebildet werden. Auf diese Weise wird erreicht, dass eine eventuelle Nachführung der Bewertungsschwelle und/oder des Vergleichssignals mit derselben Geschwindigkeit erfolgt, mit der sich auch das gemittelte Empfangssignal bei eingeschalteter Sendeeinheit aufgrund geänderter Remission durch den Hintergrund ändert.

Zu beachten ist hierbei, dass die Bestimmung des Arbeitspunkts auf die Reaktionsgeschwindigkeit des Systems insgesamt keinen Einfluss hat. Die Reaktionsgeschwindigkeit des Systems wird durch die Mittelungstiefe über das Empfangssignal bei eingeschalteter Sendeeinheit, also das eigentliche Nutzsignal und das Rauschen bestimmt. Diese beiden Mittelungen sollten dieselbe Tiefe aufweisen, damit eine Änderung des gemessenen Rauschens und damit eine Veränderung oder Anpassung der Bewertungsschwelle beziehungsweise des oben beschriebenen Faktors möglichst zeitnah mit der Änderung eines gemessenen Nutzsignals erfolgt. Der Arbeitspunkt selbst sollte zweckmäßig mit einer viel größeren Mittelungstiefe bestimmt werden, damit das Rauschen selbst überhaupt gut bestimmt werden kann. Beispielsweise können das Nutzsignal und das Rauschen über 64 Messungen gemittelt werden, während der Arbeitspunkt durch Mittelung über 1024 Messungen bei abgeschalteter Sendeeinheit bestimmt werden kann.

Zweck der gleitenden Mittelwertbildung beim Bestimmen des Arbeitspunkts ist, den Arbeitspunkt automatisch zu bestimmen und eventuelle Driften aufgrund von Temperaturänderungen oder Alterung des Systems über die Lebensdauer des Geräts auszugleichen. Dabei sind im Grundsatz noch viel größere Mittelungstiefen anwendbar. Die vorbeschriebenen Gesichtspunkte betreffen Verfahrensvarianten, bei denen das Rauschen direkt gemessen wird. Der langsam veränderliche Anteil des Empfangssignals hat im Grundsatz keinen Einfluss auf den Arbeitspunkt, da bei bevorzugten Ausgestaltungen des erfindungsgemäßen optischen Sensors zwischen der Empfangseinheit und einem Analog-Digital-Wandler ein Wechselspannungsverstärker liegt, der den langsam veränderlichen Signalanteil, also das Gleichsignal der Empfangseinheit abblockt.

Das Nutzsignal selbst ist der verstärkte oszillierende Anteil des Empfangssignals bei eingeschalteter Sendeeinheit. Dieses wird bevorzugt mit derselben Mittelungstiefe wie die Maße für das Rauschen des Fremdlichtanteils gemittelt.

Weitere Vorteile und Merkmale des erfindungsgemäßen Verfahrens und des erfindungsgemäßen optischen Sensors werden nachstehend mit Bezug auf die beigefügten schematischen Figuren näher erläutert. Hierin zeigt:
- Figur 1:: eine schematisierte Ansicht eines erfindungsgemäßen optischen Sensors;
- Figur 2:: eine schematisierte Ansicht der Empfangseinheit und der Steuer- und Auswerteeinheit des in Figur 1 dargestellten optischen Sensors; und
- Figur 3:: eine Operationsverstärkerschaltung eines erfindungsgemäßen optischen Sensors.

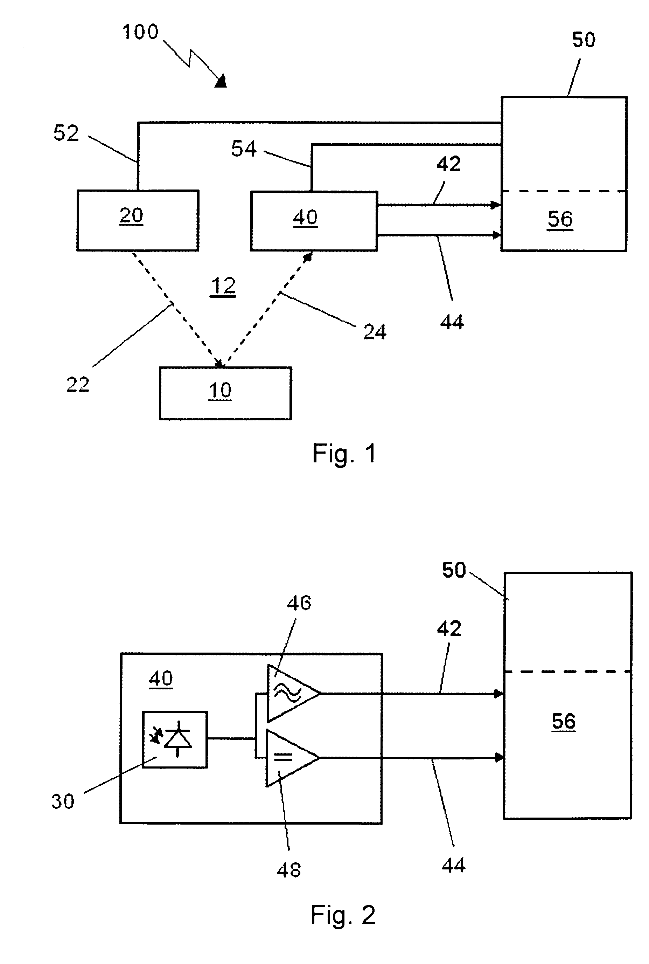

Ein Ausführungsbeispiel eines erfindungsgemäßen optischen Sensors 100 wird mit Bezug auf die Figuren 1 und 2 beschrieben. In allen Figuren sind äquivalente Komponenten mit denselben Bezugszeichen versehen.

Der erfindungsgemäße optische Sensor 100 weist als wesentliche Bestandteile eine Sendeeinheit 20, eine Empfangseinheit 40 und eine Steuer- und Auswerteeinheit 50, die mit den beiden vorgenannten Komponenten über Verbindungsleitungen 52, 54 verbunden ist, auf.

Die Sendeeinheit 20 weist mindestens eine Lichtquelle zum Aussenden von Sendelicht 22 auf, wobei es sich typischerweise um Infrarotleuchtdioden oder Infrarotlaserdioden handelt. Außerdem ist in der Sendeeinheit 20 eine nicht im Detail gezeigte Optik vorhanden, mit welcher das Sendelicht 22 in den Bereich eines Überwachungsbereichs 12 geleitet wird. Von einem im Überwachungsbereich 12 befindlichen Objekt 10 wird das Sendelicht 22 zurückgestrahlt in Richtung der Empfangseinheit 40. Bei dem zurückgestrahlten Licht 24 kann es sich grundsätzlich um reflektiertes Licht, insbesondere aber um gestreutes Licht, handeln. Details der Empfangseinheit 40 sind in Figur 2 dargestellt.

Zum messtechnischen Trennen von Lichtanteilen, welche auf das Sendelicht 22 der Sendeeinheit 20 zurückgehen, von Anteilen, die durch Fremdlichteinstrahlung, beispielsweise durch Sonnenlichteinstrahlung auf das Objekt 10 verursacht sind, wird das Sendelicht 22 oszillierend in den Überwachungsbereich 12 gestrahlt.

Die Empfangseinheit 40 weist mindestens einen Detektor 30 zum Nachweis des eintreffenden Lichts auf. Im gezeigten Beispiel handelt es sich hierbei um eine Photodiode.

Grundsätzlich können auch Photodiodenzeilen oder Photodiodenarrays, beispielsweise für Triangulationstaster, verwendet werden.

Die Empfangseinheit 40 weist darüber hinaus im gezeigten Ausführungsbeispiel zwei separate Kanäle auf. Zunächst ist ein Verstärker 46 vorhanden zum Verstärken eines oszillierenden Anteils des Empfangssignals des Detektors 30. Außerdem ist ein Verstärker 48 vorhanden zur Impedanzwandlung eines Gleichanteils oder jedenfalls langsam veränderlichen Teils des Empfangssignals des Detektors 30. Der verstärkte oszillierende Anteil des Empfangssignals ist in Figur 2 schematisch durch einen Pfeil 42 wiedergegeben und wird der Steuer- und Auswerteeinheit 50 zugeführt. Außerdem wird der langsam veränderliche Signalanteil, der in Figur 2 durch einen Pfeil 44 schematisch dargestellt ist, an die Steuer- und Auswerteeinheit 50 weitergeleitet. Erfindungsgemäß weist die Steuer- und Auswerteeinheit 50 eine Bewertungseinheit 56 auf zum Berücksichtigen des auf den Detektor 30 auftreffenden Fremdlichtanteils bei der Auswertung.

Erfindungsgemäß ist demnach die Steuer- und Auswerteeinheit 50 so ausgelegt, dass sie sowohl das durch die Sendeeinheit 20 verursachte dynamische Signal als auch das durch Fremdlicht verursachte langsam veränderliche Signal, das auch als Gleichsignal bezeichnet wird, messen kann. Eine Elektronik der Empfangseinheit 40 kann vorzugsweise auch so ausgelegt sein, dass die oben beschriebenen Funktionen des Verstärkers 46 und des Verstärkers 48 mit ein und derselben Schaltung verwirklicht werden. Bei einer solchen Schaltung wird das dynamische Signal mit Hilfe des Verstärkers 46 verstärkt, der langsam veränderliche Anteil des Empfangssignals, der auf Fremdlicht zurückgeht, jedoch gedämpft. Das lässt sich erreichen, indem die entsprechende Elektronik mindestens einen Hochpass aufweist, wobei aber auch ein Gleichanteil des Empfangssignals wenigstens teilweise durchgelassen werden muss. Schematisch ist dies in Figur 2 dargestellt.

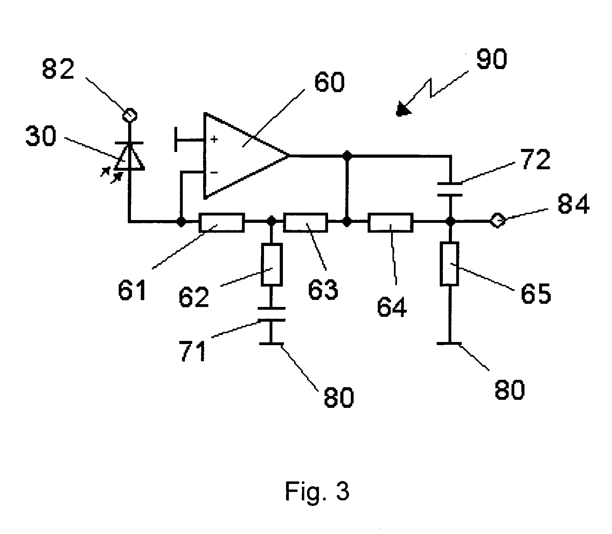

Ein konkretes Beispiel einer Operationsverstärkerschaltung 90, die diese Funktionalität aufweist, ist in Figur 3 gezeigt. Die Kathode einer den Detektor 30 bildenden Photodiode ist dort mit der Versorgungsspannung 82 und die Anode dieser Photodiode ist mit dem invertierenden Eingang eines Operationsverstärkers 60 verbunden. Der Ausgang des Operationsverstärkers 60 ist über einen ersten Widerstand 61 und einen dritten Widerstand 63 auf den invertierenden Eingang des Operationsverstärkers 60 zurückgekoppelt. Über einen zweiten Widerstand 62 und eine erste Kapazität 71 ist die Verbindung zwischen dem ersten Widerstand 61 und dem dritten Widerstand 63 außerdem auf Masse 80 geführt. Der Ausgang des Operationsverstärkers 60 ist sodann über eine Parallelschaltung eines vierten Widerstands 64 und einer zweiten Kapazität 72 auf einen Ausgang 84 der Verstärkerschaltung 90 geführt, die außerdem über einen fünften Widerstand 65 mit Masse 80 verbunden ist.

Ein oszillierender Anteil des Empfangssignals des Detektors 30, also der dynamische Teil des Photostroms der Photodiode, fließt über den ersten Widerstand 61, den zweiten Widerstand 62 und die erste Kapazität 71 nach Masse 80 ab und generiert am ersten Widerstand 61 einen Spannungsabfall. Dieser Spannungsabfall wird durch den Operationsverstärker 60 um das Verhältnis der Werte des dritten Widerstands 63 und des zweiten Widerstands 62 verstärkt.

Nach dem Operationsverstärker 60 wird das verstärkte dynamische Signal durch die Kapazität 72 ungedämpft auf den Ausgang 84 gekoppelt. Im Unterschied dazu fließt der langsam veränderliche Anteil des Photostroms, der durch Fremdlicht bewirkt wird, über den ersten Widerstand 61 und den dritten Widerstand 63 zum Ausgang des Operationsverstärkers 60 und generiert dabei an diesen beiden Widerständen einen Spannungsabfall, der unverstärkt am Ausgang des Operationsverstärkers 60 erscheint. Durch einen durch den vierten Widerstand 64 und den fünften Widerstand 65 gebildeten Spannungsteiler wird dieses Signal heruntergeteilt und scheint somit gedämpft am Ausgang 84 der Operationsverstärkerschaltung 90.

Die nachgeschaltete Bewertungseinheit 56 trennt das langsam veränderliche Signal von dem dynamischen Signal, vorzugsweise durch eine doppelte Signalabtastung. Dabei kann eine der beiden Abtastungen durchgeführt werden, während die Sendeeinheit 20 abgeschaltet ist, und die zweite Abtastung wird bei eingeschalteter Sendeeinheit 20 durchgeführt.

Die Differenz der bei beiden Abtastungen gewonnen Messwerte ist das dynamische Signal. Die erste Abtastung erfasst den langsam veränderlichen Fremdlichtanteil. Eine Besonderheit der in Figur 3 gezeigten Schaltung besteht darin, dass sowohl das dynamische Signal als auch das langsam veränderliche Signal denselben Pfad durchlaufen.

Die auf diese Weise gewonnen Signale können prinzipiell auf zwei unterschiedlichen Wegen weiterverarbeitet werden. Einerseits kann, wenn ein erhöhter Fremdlichtanteil gemessen wird, die Bewertungsschwelle um einen Zusatzbetrag erhöht werden. Da das Fremdlichtrauschen proportional zur Wurzel aus der Intensität des Fremdlichts ist, ist bei dieser Ausführung dieser Betrag proportional zur Wurzel des gemessenen Fremdlichtanteils.

Bei einer zweiten Auswertemöglichkeit wird mit einer konstanten Bewertungsschwelle gearbeitet, die normalerweise relativ hoch liegt. Die dynamischen Signale oder jedenfalls davon abgeleitete Signale werden im Verlauf der Verarbeitung mit einem Faktor multipliziert, der umso kleiner ist, je größer der ermittelte Fremdlichtanteil ist. Bei diesem Verfahren wird das Vergleichssignal, sofern ein nachzuweisendes Objekt im Überwachungsbereich vorhanden ist, anschaulich gesprochen, über die Bewertungsschwelle gehoben, wobei das Vergleichssignal umso weniger angehoben werden muss, je größer das Empfangssignal ohnehin aufgrund des Fremdlichtanteils ist. Der Faktor, mit welchem der oszillierende Anteil des Empfangssignals multipliziert wird, ist umgekehrt proportional zur Wurzel einer Summe aus dem Fremdlichtanteil und einer Konstanten. Mit dieser Konstante kann ein Dunkelrauschen des Detektors 30 berücksichtigt werden und die Konstante wird hierzu bevorzugt proportional zum Quadrat des Dunkelrauschens gewählt.

Diese mathematischen Operationen werden in der Bewertungseinheit 56 nach Wandlung der analogen Signale durch einen Analog-Digital-Wandler mit Hilfe eines Rechners, beispielsweise eines Mikrocontrollers, durchgeführt.

Mit der vorliegenden Erfindung werden ein Verfahren und ein optischer Sensor zum Nachweis von Objekten in einem Überwachungsbereich angegeben, bei dem im Unterschied zum Stand der Technik auch ein auf eine Empfangseinheit eintreffender Fremdlichtanteil bei der Auswertung berücksichtigt wird. Dadurch können für unterschiedliche Fremdlichtsituationen und Einsatzzwecke jeweils weitgehend optimale Empfindlichkeiten erreicht werden. Insbesondere kann das Signal/Rauschverhältnis um bis zu einem Faktor 10 gesteigert werden.

## Patentansprüche

1. Verfahren zum Nachweis von Objekten in einem Überwachungsbereich, bei dem mit einer Sendeeinheit (20) Sendelicht (22) in den Überwachungsbereich (12) gestrahlt wird,
bei dem mit einer Empfangseinheit (40) aus dem Überwachungsbereich (12) zurückgestrahltes Licht (24) nachgewiesen wird,
bei dem zur Auswertung zumindest ein Anteil eines Empfangssignals der Empfangseinheit (40) verstärkt wird,
bei dem ein Nachweissignal abgegeben wird, wenn ein von dem Empfangssignal der Empfangseinheit (40) abgeleitetes Vergleichssignal größer ist als eine festzulegende Bewertungsschwelle,
**dadurch gekennzeichnet,**
**dass** zum messtechnischen Trennen von Lichtanteilen, welche auf das Sendelicht (22) der Sendeeinheit (20) zurückgehen, von Anteilen, die durch nicht oszillierendes Fremdlicht, insbesondere durch Sonnenlichteinstrahlung auf ein Objekt (10) verursacht sind, wird das Sendelicht (22) oszillierend in den Überwachungsbereich (12) gestrahlt wird,
wobei der verstärkte Anteil des Empfangssignals ein oszillierender Anteil ist, dass ein durch das nicht oszillierende Fremdlicht in der Empfangseinheit (40) generiertes Gleichsignal bei der Auswertung berücksichtigt wird,
**dass** mit zunehmendem Fremdlichtanteil die Bewertungsschwelle angehoben wird um einen Betrag, der wenigstens in Teilbereichen proportional zur Wurzel des gemessenen Fremdlichtanteils ist, und/oder
**dass** das Vergleichssignal um einen mit zunehmendem Fremdlichtanteil kleiner werdenden Faktor angehoben wird, welcher mindestens in Teilbereichen umgekehrt proportional ist zur Wurzel einer Summe des Fremdlichtanteils und einer Konstanten.

2. Verfahren nach Anspruch 1,
**dadurch gekennzeichnet,**
**dass** das Rauschen des Fremdlichtanteils aus den Messwerten einer Vielzahl von Messungen bestimmt wird.

3. Verfahren nach Anspruch 1 oder 2,
**dadurch gekennzeichnet,**
**dass** ein Maß für das Rauschen des Fremdlichtanteils bestimmt wird durch Mittelung über Absolutwerte von Abweichungen von Messwerten des Empfangssignals um einen Mittelwert oder durch Mittelung über Quadrate von Abweichungen von Messwerten des Empfangssignals um einen Mittelwert.

4. Verfahren nach Anspruch 3,
**dadurch gekennzeichnet,**
**dass** zum Bestimmen des Mittelwerts und der Maße für das Rauschen des Fremdlichtanteils gleitende Mittelwertbildungen durchgeführt werden.

5. Verfahren nach Anspruch 4,
**dadurch gekennzeichnet,**
**dass** der Mittelwert des Empfangssignals bei eingeschalteter Sendeeinheit (20) und Maße für das Rauschen des Fremdlichtanteils mit derselben Mittelungstiefe gebildet werden.

6. Verfahren nach einem der Ansprüche 1 bis 5,
**dadurch gekennzeichnet,**
**dass** der Fremdlichtanteil bei ausgeschalteter Sendeeinheit (20) bestimmt wird.

7. Verfahren nach einem der Ansprüche 1 bis 6,
**dadurch gekennzeichnet,**
**dass** die Konstante einem Dunkelrauschen eines Detektors (30) der Empfangseinheit (40) oder dem Quadrat dieses Dunkelrauschens entspricht.

8. Optischer Sensor zum Nachweis von Objekten in einem Überwachungsbereich, insbesondere zur Durchführung des Verfahrens nach einem der Ansprüche 1 bis 7, mit einer Sendeeinheit (20) zum Strahlen von Sendelicht (22) in den Überwachungsbereich (12),
mit einem Empfangseinheit (40) zum Nachweis von aus dem Überwachungsbereich (12) zurückgestrahltem Licht (24) und zum Verstärken zumindest eines Anteils eines Empfangssignals der Empfangseinheit (40),
mit einer Steuer- und Auswerteeinheit (50) zum Ansteuern der Sendeeinheit (20), zum Auswerten des von der Empfangseinheit (40) nachgewiesenen Lichts (24) und zum Abgeben eines Nachweissignals, wenn ein von dem Empfangssignal der Empfangseinheit (40) abgeleitetes Vergleichssignal größer ist als eine festzulegende Bewertungsschwelle,
**dadurch gekennzeichnet,**
**dass** zum messtechnischen Trennen von Lichtanteilen, welche auf das Sendelicht (22) der Sendeeinheit (20) zurückgehen, von Anteilen, die durch nicht oszillierendes Fremdlicht, insbesondere durch Sonnenlichteinstrahlung auf ein Objekt (10) verursacht sind, die Sendeeinheit (20) dazu eingerichtet ist, das Sendelicht (22) oszillierend in den Überwachungsbereich (12) zu strahlen,
**dass** die Steuer- und Auswerteeinheit (50) eine Bewertungseinheit (56) aufweist zum Berücksichtigen eines in der Empfangseinheit (40) durch das nicht oszillierende Fremdlicht generierten Gleichsignals bei der Auswertung,
**dass** die Bewertungseinheit (56) eine Operationsverstärkerschaltung (90) aufweist mit einem Rückkoppelungsnetzwerk zum Verstärken des oszillierenden Anteils des Empfangssignals und zum Durchreichen oder Dämpfen des durch das Fremdlicht generierten Gleichsignals,
**dass** die Steuer- und Auswerteeinheit (50) eingerichtet ist zum Anheben der Bewertungsschwelle mit zunehmendem Fremdlichtanteil um einen Betrag, der wenigstens in Teilbereichen proportional zur Wurzel des gemessenen Fremdlichtanteils ist, und/oder
**dass** die Steuer- und Auswerteeinheit (50) eingerichtet ist zum Anheben des Vergleichssignals um einen mit zunehmendem Fremdlichtanteil kleiner werdenden Faktor, welcher mindestens in Teilbereichen umgekehrt proportional ist zur Wurzel einer Summe des Fremdlichtanteils und einer Konstanten.

9. Sensor nach Anspruch 8
**dadurch gekennzeichnet,**
**dass** die Bewertungseinheit (56) eine weitere Operationsverstärkerschaltung aufweist als Impedanzwandler zum Durchreichen und/oder Verstärken des durch das Fremdlicht generierten Gleichsignals.

10. Sensor nach Anspruch 8 oder 9,
**dadurch gekennzeichnet,**
**dass** die Steuer- und Auswerteeinheit (50) einen Analog-Digital-Wandler aufweist zum digitalen Durchführen der Änderungen der Bewertungsschwelle und/oder des Vergleichssignals.

11. Sensor nach einem der Ansprüche 8 bis 10,
**dadurch gekennzeichnet,**
**dass** der oszillierende Anteil des Empfangssignals und das durch das Fremdlicht generierte Gleichsignal an demselben Ausgang (84) einer Verstärkerschaltung bereitgestellt werden.

## Claims

1. Method for detecting objects in a monitoring area,
wherein transmitted light (22) is radiated by a transmitter (20) into a monitoring area (12),
wherein light (24) radiated back from the monitoring area (12) is detected with a receiver (40),
wherein at least a portion of a receive signal of the receiver (40) is amplified for the evaluation,
wherein a detect signal is emitted if a compare signal derived from the receive signal of the receiver (40) is greater than a pre-set evaluation threshold,
**characterised in that**
for measured separation of light portions emanating from the transmitted light (22) of the transmitter (20) from portions which are caused by non-oscillating extraneous light, in particular by sunlight radiation on an object (10), the transmitted light (22) is radiated in an oscillating manner into the monitoring area (12),
wherein the amplified portion of the receive signal is an oscillating portion,
a direct signal generated by the non-oscillating extraneous light in the receiver (40) is considered in the evaluation,
with an increasing extraneous light portion the evaluation threshold is raised by an amount which, at least in partial areas, is proportional to the root of the measured extraneous light portion, and / or
the compare signal is raised by a factor which becomes smaller as the extraneous light portion increases and which, at least in partial areas, is inversely proportional to the root of a sum of the extraneous light portion and a constant.

2. Method according to claim 1,
**characterised in that**
the noise of the extraneous light portion is determined from the measurement values of a plurality of measurements.

3. Method according to claim 1 or 2,
**characterised in that**
a measure for the noise of the extraneous light portion is determined by averaging via absolute values of deviations from measurement values of the receive signal around an average value or by averaging via squares of deviations from measurement values of the receive signal around an average value.

4. Method according to claim 3,
**characterised in that**
moving averaging operations are carried out to determine the average value and the measures for the noise of the extraneous light portion.

5. Method according to claim 4,
**characterised in that**
the average value of the receive signal when the transmitter (20) is switched on and measures for the noise of the extraneous light portion are formed with the same averaging depth.

6. Method according to one of claims 1 to 5,
**characterised in that**
the extraneous light portion is determined when the transmitter (20) is switched off.

7. Method according to one of claims 1 to 6,
**characterised in that**
the constant corresponds to a dark noise of a detector (30) of the receiver (40) or to the square of this dark noise.

8. Optical sensor for detecting objects in a monitoring area, in particular for carrying out the method according to one of claims 1 to 7,
having a transmitter (20) to radiate transmitted light (22) into the monitoring area (12),
having a receiver (40) to detect light (24) radiated back from the monitoring area (12) and to amplify at least a portion of a receive signal of the receiver (40), having a control and evaluation unit (50) to control the transmitter (20), to evaluate the light (24) detected by the receiver (40) and to emit a detect signal if a compare signal derived from the receive signal of the receiver (40) is greater than a pre-set evaluation threshold,
**characterised in that**
for measured separation of light portions emanating from the transmitted light (22) of the transmitter (20) from portions which are caused by non-oscillating extraneous light, in particular by sunlight radiation on an object (10), the transmitter (20) is adapted to radiate the transmitted light (22) in an oscillating manner into the monitoring area (12),
the control and evaluation unit (50) has an evaluation unit (56) to consider, with the evaluation, a direct signal generated in the receiver (40) by the non-oscillating extraneous light,
the evaluation unit (56) has an operation amplifier circuit (90) with a feedback network to amplify the oscillating portion of the receive signal and to pass through or dampen the direct signal generated by the extraneous light,
the control and evaluation unit (50) is adapted to raise the evaluation threshold when the extraneous light portion increases by an amount which, at least in partial areas, is proportional to the root of the measured extraneous light portion, and / or
the control and evaluation unit (50) is adapted to raise the compare signal by a factor which becomes smaller as the extraneous light portion increases and which is inversely proportional, at least in partial areas, to the root of a sum of the extraneous light portion and a constant.

9. Sensor according to claim 8,
**characterised in that**
the evaluation unit (56) has a further operation amplifier circuit as an impedance converter to pass through and / or amplify the direct signal generated by the extraneous light.

10. Sensor according to claim 8 or 9,
**characterised in that**
the control and evaluation unit (50) has an analog-digital converter to digitally carry out the changes in the evaluation threshold and / or the compare signal.

11. Sensor according to one of claims 8 to 10,
**characterised in that**
the oscillating portion of the receive signal and the direct signal generated by the extraneous light are provided at the same output (84) of an amplifier circuit.

## Revendications

1. Procédé destiné à la détection d'objets dans une zone de surveillance, selon lequel :
- on procède à l'émission d'une lumière (22) émise par une unité d'émission (20) dans la zone de surveillance (12),
- de la lumière réfléchie (24) provenant de la zone de surveillance (12) est détectée par une unité de réception (40),
- à des fins d'analyse, au moins une partie d'un signal de réception de l'unité de réception (40) est amplifiée,
- un signal de détection est émis lorsqu'un signal de comparaison dérivé du signal de réception de l'unité de réception (40) est supérieur à un seuil d'évaluation devant être défini,
**caractérisé en ce que** :
- la lumière (22) émise est émise de manière oscillante dans la zone de surveillance (12), afin de séparer - par mesure - des composantes de lumière résultant de la lumière émise (22) par l'unité d'émission (20) de composantes issues d'une lumière externe non oscillante, en particulier par un rayonnement de la lumière du soleil sur un objet (10),
- la composante amplifiée du signal de réception étant une composante oscillante,
- un signal continu généré dans l'unité de réception (40) par la lumière externe non oscillante est pris en compte lors de l'analyse,
- à mesure que la composante de lumière externe augmente, le seuil d'évaluation est relevé d'une quantité qui, au moins dans des portions de zones, est proportionnelle à la racine de la composante de lumière externe mesurée, et/ou
- le signal de comparaison est relevé d'un facteur de plus en plus petit à mesure que la composante de lumière externe augmente, qui, au moins dans des portions de zones, est inversement proportionnel à la racine d'une somme de la composante de lumière externe et d'une constante.

2. Procédé selon la revendication 1,
**caractérisé en ce que**
le bruit de la composante de lumière externe est déterminé à partir des valeurs de mesure d'une pluralité de mesures.

3. Procédé selon la revendication 1 ou 2,
**caractérisé en ce qu'**
une mesure relative au bruit de la composante de lumière externe est déterminée par formation de la moyenne des valeurs absolues des écarts des valeurs de mesure du signal de réception par rapport à une valeur moyenne, ou par formation de la moyenne des carrés des écarts des valeurs de mesure du signal de réception par rapport à une valeur moyenne.

4. Procédé selon la revendication 3,
**caractérisé en ce que**,
pour la détermination de la valeur moyenne et des mesures relatives au bruit de la composante de lumière externe, des valeurs de moyennes glissantes sont mises en oeuvre.

5. Procédé selon la revendication 4,
**caractérisé en ce que**
la valeur moyenne du signal de réception pour une unité d'émission (20) activée et les mesures relatives au bruit de la composante de lumière externe sont établies avec le même nombre de valeurs utilisées pour la formation de moyenne.

6. Procédé selon une des revendications 1 à 5,
**caractérisé en ce que**
la composante de lumière externe est déterminée pour une unité d'émission (20) éteinte.

7. Procédé selon une des revendications 1 à 6,
**caractérisé en ce que**
la constante correspond à un bruit d'obscurité d'un détecteur (30) de l'unité de réception (40) ou au carré de ce bruit d'obscurité.

8. Capteur optique destiné à la détection d'objets dans une zone de surveillance, plus particulièrement par la mise en oeuvre du procédé selon l'une des revendications 1 à 7, comprenant :
- une unité d'émission (20) pour l'émission d'une lumière émise (22) dans la zone de surveillance (12),
- une unité de réception (40) pour la détection d'une lumière réfléchie (24) provenant de la zone de surveillance (12) et pour l'amplification d'au moins une partie d'un signal de réception de l'unité de réception (40),
- une unité de commande et d'analyse (50) pour la commande de l'unité d'émission (20), pour l'analyse de la lumière détectée (24) provenant de l'unité de réception (40), et pour l'émission d'un signal de détection si un signal de comparaison dérivé du signal de réception de l'unité de réception (40) est supérieur à un seuil d'évaluation devant être défini,
**caractérisé en ce que** :
- l'unité d'émission (20) est configurée pour émettre la lumière émise (22) de manière oscillante dans la zone de surveillance (12) afin de séparer - par mesure - des composantes de la lumière résultant de la lumière émise (22) par l'unité d'émission (20) de composantes issues d'une lumière externe non oscillante, en particulier par un rayonnement de la lumière du soleil sur un objet (10), ,
- l'unité de commande et d'analyse (50) comprend une unité d'évaluation (56) destinée à la prise en compte, lors de l'analyse, d'un signal continu généré par la lumière externe non oscillante dans l'unité de réception (40),
- l'unité d'analyse (56) comprend un circuit d'amplification opérationnelle (90) avec un réseau de rétroaction, pour amplifier la composante oscillante du signal de réception et pour laisser passer ou atténuer le signal continu généré par la lumière externe,
- l'unité de commande et d'analyse (50) est configurée pour, à mesure que la composante de lumière externe augmente, relever le seuil d'évaluation d'une quantité qui, au moins dans des portions de zones, est proportionnelle à la racine de la composante de lumière externe mesurée, et/ou
- l'unité de commande et d'analyse (50) est configurée pour, à mesure que la-composante de lumière externe augmente, relever le signal de comparaison d'un facteur de plus en plus petit, qui, au moins dans des portions de zones, est inversement proportionnel à la racine d'une somme de la composante de lumière externe et d'une constante.

9. Capteur selon la revendication 8,
**caractérisé en ce que**
l'unité d'évaluation (56) comprend un circuit d'amplification opérationnelle supplémentaire comme convertisseur d'impédance, pour laisser passer et/ou amplifier le signal continu généré par la lumière externe.

10. Capteur selon la revendication 8 ou 9,
**caractérisé en ce que**
l'unité de commande et d'analyse (50) comprend un convertisseur analogique-numérique pour la mise en oeuvre numérique des modifications du seuil d'évaluation et/ou du signal de comparaison.

11. Capteur selon une des revendications 8 à 10,
**caractérisé en ce que**
la composante oscillante du signal de réception et le signal continu généré par la lumière externe sont fournis sur la même sortie (84) d'un circuit d'amplification.
